# DEMANDE DE BREVET EUROPEEN

(11) **EP 2 620 631 A1**
(43) Date de publication de la demande: **31.07.2013**
(21) Numéro de dépôt: 13150900.2
(22) Date de dépôt: 11.01.2013
(51) Int. Cl.: F02M 25/07, F02M 27/02, F02D 13/02, F02B 37/18, F01N 13/10

(54) **Groupe moteur à deux collecteurs d'échappement**

(30) Priorité: 30.01.2012 FR 1250826
(71) Demandeur: PEUGEOT CITROËN AUTOMOBILES SA, 78140 Velizy-Villacoublay (FR)
(72) Inventeur: Veiga Pagliari, Diego Rafael, 75012 Paris (FR)

(57) **Abrégé**

L'invention concerne un groupe moteur (1) comprenant un moteur à combustion interne (2) duquel débouche, d'une part, un collecteur d'échappement haute pression (9) alimentant une ligne d'échappement (11) qui comprend une turbine (12) d'un turbocompresseur, et, d'autre part, un collecteur d'échappement basse pression (10) alimentant une ligne de recirculation des gaz d'échappement (14).

Selon l'invention, la ligne de recirculation (14) comprend un dispositif catalytique de production de dihydrogène (18).

## Description

L'invention concerne un groupe moteur à deux collecteurs d'échappement, l'un à haute pression, l'autre à basse pression, notamment pour les véhicules automobiles.

Est connu un groupe moteur comprenant un moteur à combustion interne duquel débouche, d'une part, un collecteur d'échappement haute pression alimentant une ligne d'échappement qui comprend une turbine d'un turbocompresseur, et, d'autre part, un collecteur d'échappement basse pression alimentant une ligne de recirculation des gaz d'échappement et la sortie turbine ( dite « wastegate » en anglais). Usuellement, les expressions « échappement basse pression » et « échappement haute pression » sont réciproquement qualifiées par les termes anglais « scavenge » et « blowdown ».

Un tel groupe moteur présente de nombreux avantages par rapport à un groupe moteur ayant un seul collecteur d'échappement. Ainsi, un tel groupe moteur permet d'avoir deux phases d'échappement distinctes, l'une pour le collecteur d'échappement haute pression, l'autre pour le collecteur d'échappement basse pression en associant au moteur deux séries de cames d'échappement décalées angulairement l'une par rapport à l'autre. De ce fait, la turbine et la ligne de recirculation peuvent être alimentées de façon découplées, et ceci respectivement d'après le mouvement d'une soupape d'échappement haute pression (commandée par une came d'échappement haute pression) ou d'une soupape d'échappement basse pression (commandée par une came basse pression).

La présente invention vise à améliorer un tel groupe moteur, notamment en améliorant la physique de la combustion dans le moteur par l'utilisation de la ligne de recirculation, sans diminuer/pénaliser les performances liées à la gestion de la turbine.

L'invention porte ainsi sur un groupe moteur comprenant un moteur à combustion interne duquel débouche, d'une part, un collecteur d'échappement haute pression alimentant une ligne d'échappement qui comprend une turbine d'un turbocompresseur, et, d'autre part, un collecteur d'échappement basse pression alimentant une ligne de recirculation des gaz d'échappement, **caractérisé en ce que** la ligne de recirculation comprend un dispositif catalytique de production de dihydrogène.

Du fait de la présence des deux collecteurs d'échappement haute pression et basse pression, les performances du moteur liées à la gestion de l'alimentation de la turbine sont maintenues, et du fait de la présence d'un dispositif catalytique de production de dihydrogène dans la ligne de recirculation des gaz d'échappement, l'alimentation du moteur en dihydrogène est augmentée. L'alimentation en dihydrogène diminue le risque de cliquetis et augmente la plage de charge du moteur dans laquelle le phasage de la combustion est idéale.

Selon un premier mode de réalisation particulier, un réchauffeur des gaz en recirculation est disposé dans la ligne de recirculation en amont du dispositif catalytique de production de dihydrogène. De ce fait, il est possible de réchauffer les gaz d'échappement afin que le dispositif catalytique atteigne la température minimale pour obtenir une production de dihydrogène conséquente.

Selon un second mode de réalisation particulier, un refroidisseur des gaz en recirculation est disposé dans la ligne de recirculation en aval du dispositif catalytique de production de dihydrogène. De ce fait, il est possible de refroidir les gaz en recirculation après la production du dihydrogène, ce qui permet notamment de réduire l'encombrement de la ligne de recirculation.

Selon un troisième mode de réalisation particulier, la ligne de recirculation débouche dans une conduite d'admission d'air en amont d'un compresseur du turbocompresseur.

Selon un quatrième mode de réalisation particulier, une vanne de recirculation est disposée dans la ligne de recirculation en aval du dispositif catalytique de production d'hydrogène. De ce fait, il est possible de réaliser un contrôle additionnel du débit de gaz circulant dans la ligne de recirculation des gaz d'échappement, car la gestion des cames « haute pression » et « basse pression » permet aussi de réguler le débit d'EGR.(EGR est l'acronyme pour « Exhaust Gas Recirculation » en anglais, visant toute recirculation des gaz d'échappement vers le moteur.)

Selon un cinquième mode de réalisation particulier, une conduite de dérivation comprenant une vanne de dérivation relie le collecteur d'échappement basse pression à la ligne d'échappement en contournant la turbine. De ce fait, les gaz d'échappement basse pression peuvent emprunter la ligne de recirculation des gaz d'échappement ou contourner la turbine et être rejetés hors du véhicule.

Selon un sixième mode de réalisation particulier, les gaz d'échappement en sortie du collecteur haute pression ne peuvent qu'entraîner la turbine avant d'être envoyés vers la ligne d'échappement. De ce fait, les gaz d'échappement haute pression ne peuvent pas circuler dans la ligne de recirculation des gaz d'échappement.

Selon un septième mode de réalisation particulier, le groupe moteur comprend d'une part, une série de came basse pression permettant le contrôle de l'alimentation du collecteur d'échappement basse pression, et, d'autre part, une série de cames haute pression permettant le contrôle de l'alimentation du collecteur d'échappement haute pression, les cames haute et basse pression étant angulairement décalées de sorte que l'ouverture d'une soupape haute pression est commandée en avance d'un angle d'environ 100°avant la commande de l'ouverture d'une soupape basse pression. De ce fait, dans un premier temps et pendant une durée correspondant à une course de vilebrequin d'environ 100°, les gaz d'échappement sont uniquement envoyés à la turbine, puis dans un second temps, les gaz d'échappement sont envoyés dans les deux collecteurs d'échappement.

Selon un huitième mode de réalisation particulier, les cames haute et basse pression sont angulairement décalées de sorte que la fermeture de la soupape haute pression est commandée en avance d'un angle d'environ 65° avant la commande de la fermeture de la soupape basse pression. De ce fait, dans un troisième et dernier temps, et pendant une durée correspondant à une course du vilebrequin d'environ 65°, la turbine n'est plus alimentée, tous les gaz d'échappement étant envoyés dans le collecteur basse pression, ce qui permet notamment de réduire la perte de charge et d'augmenter la quantité de gaz vidangée des chambres de combustion du moteur.

Selon un neuvième mode de réalisation particulier, la soupape d'échappement haute pression et la soupape d'échappement basse pression sont dans leur position ouverte respective quand un vilebrequin est dans une position angulaire comprise respectivement entre 90° et 240° et entre 120 ° et 410° par rapport à la position de point mort haut de combustion. De ce fait, la plage de la phase d'échappement est particulièrement large et constituée de la réunion de la plage d'échappement haute pression et la plage d'échappement basse pression, la position et l'amplitude angulaires de chacune de ces deux dernières plages étant adaptées à la nature des lignes alimentées par les deux collecteurs d'échappement.

D'autres caractéristiques et avantages de l'invention ressortiront clairement de la description qui en est faite ci-après, à titre indicatif et nullement limitatif, en référence aux dessins annexés, dans lesquels :
- la figure 1 est une représentation d'un groupe moteur conforme à un mode de réalisation de la présente invention et
- la figure 2 illustre les déplacements des soupapes d'admission et d'échappement en fonction de la position angulaire d'un piston correspondant.

L'invention se rapporte à un véhicule automobile, et plus particulièrement à un groupe moteur 1 d'un véhicule automobile.

Le groupe moteur 1 comprend un moteur à combustion interne 2, en l'occurrence, un moteur à essence. Ce moteur comprend des chambres de combustion 3 (ici, au nombre de quatre) qui sont alimentées en carburant.

Chaque chambre de combustion 3 est alimentée en air par un collecteur d'air 4 commun à toutes les chambres 3, le collecteur d'air 4 formant l'extrémité aval d'une conduite d'admission 5. La conduite d'admission 5 comprend une vanne d'air 6 qui permet de contrôler le débit d'air admis dans le moteur 2.

De chaque chambre de combustion 3 débouchent deux conduites d'échappement 7, 8, l'une 7, haute pression, reliant la chambre de combustion 3 à un collecteur d'échappement haute pression 9, l'autre 8, basse pression, reliant la chambre de combustion 3 à un collecteur d'échappement basse pression 10. Ainsi, au moteur 2 sont associés deux collecteurs d'échappement 9, 10, chacun de ces deux collecteurs d'échappement 9, 10 étant alimenté par toutes les chambres de combustion du moteur 2.

Au moteur 2 sont également associées trois séries de cames : une première série de cames d'admission commandant des soupapes d'admission permettant de contrôler l'alimentation du moteur 2 en air, et deux séries de cames d'échappement commandant des soupape d'échappement permettant de contrôler l'échappement des gaz de combustion hors des chambres de combustion 3. Classiquement, un arbre à cames d'admission ne porte que la première série de cames.

Les deux séries de cames d'échappement comprennent une série de came haute pression permettant le contrôle de l'alimentation du collecteur d'échappement haute pression 9, et une série de cames basse pression permettant le contrôle de l'alimentation du collecteur d'échappement basse pression 10. Les deux séries de cames d'échappement peuvent soit être portées par un unique arbre à cames d'échappement, soit portées par deux arbres à cames d'échappement, l'un portant toutes les cames haute pression, l'autre toute les cames haute pression. En tout état de cause, les deux séries de cames sont décalées angulairement l'une par rapport à l'autre de façon à avoir un découplage de l'alimentation des deux collecteurs d'échappement 9, 10.

Le collecteur d'échappement haute pression 9 alimente une ligne d'échappement 11 qui comprend une turbine 12 et, en aval de cette dernière, un système de traitement 13 permettant de traiter les gaz avant leur sortie dans l'atmosphère. Dans le présent exemple, la ligne d'échappement 11 est la seule ligne alimentée par le collecteur d'échappement haute pression 9 de sorte que les gaz d'échappement contenus dans ce dernier ne peuvent qu'entraîner la turbine 12 puis être envoyés dans le système de traitement 13.

Le collecteur d'échappement basse pression 10 alimente une ligne de recirculation 14 permettant la réintroduction des gaz d'échappement dans le moteur 2. la ligne de recirculation 14 débouche dans la conduite d'admission 5, en amont de la vanne d'air 6. Par ailleurs, la ligne de recirculation 14 débouche dans la conduite d'admission 5 en amont d'un compresseur 15 qui est entraîné par la turbine 12 et qui forme, avec cette dernière, un turbocompresseur. Classiquement un échangeur de chaleur 16 est disposé dans la conduite d'admission 5 entre le compresseur 15 et la vanne d'air 6 afin de permettre la régulation de la température des gaz admis dans le moteur 2 (essentiellement, afin de permettre leur refroidissement).

De plus, une vanne de recirculation 17 est disposée dans la ligne de recirculation 14 et permet de contrôler le débit de gaz circulant dans cette dernière.

La ligne de recirculation 14 comprend un dispositif catalytique de production de dihydrogène 18 qui permet de produire du dihydrogène à partir de carburant. A cet effet, du carburant un injecté dans le groupe moteur 1 de manière à se trouver dans la ligne de recirculation 14. Dans le présent mode de réalisation, la ligne de recirculation 14 comprend, en amont du dispositif catalytique de production de dihydrogène 18, un injecteur de carburant 19. D'autres solutions sont possibles pour permettre à du carburant d'être présent dans la ligne de recirculation : par exemple, soit une injection tardive de carburant dans au moins une chambre de combustion 3 quand la soupape d'échappement basse pression associée à cette chambre est dans une position ouverte (et de préférence quand la soupape d'échappement haute pression associée à cette chambre est dans une position fermée), soit une injection de carburant dans la conduite d'admission 5 quand la soupape d'admission et la soupape d'échappement basse pression sont toutes deux dans une position ouverte (et de préférence quand la soupape d'échappement haute pression est dans une position fermée).

En outre un réchauffeur 20 permettant de réchauffer les gaz en recirculation est disposé dans la ligne de recirculation 14, en amont du dispositif catalytique de production d'hydrogène 18, et en aval de l'injecteur de carburant 19. Ce réchauffeur 20 permet d'augmenter la température des gaz de façon à faciliter la production de dihydrogène se réalise dans le dispositif catalytique 18.

De plus, un refroidisseur 21 permettant de refroidir les gaz en recirculation est disposé dans la ligne de recirculation 14, en aval du dispositif catalytique de production de dihydrogène 18. Ce refroidisseur 21 permet de refroidir les gaz de recirculation une fois le dihydrogène produit de façon à réduire l'encombrement de la ligne de recirculation 14, de façon à améliorer le rendement du moteur/turbocompresseur (il faut limiter température en entrée du compresseur, car la température limite en sortie compresseur est à 180°C).

De ce fait, la ligne de recirculation 14 comprend d'amont en aval, depuis le collecteur d'échappement basse pression 10, l'injecteur de carburant 19, le réchauffeur 20, le dispositif catalytique de production de dihydrogène 18, le refroidisseur 21 et la vanne de recirculation 17, avant de déboucher dans la conduite d'admission 5.

Par ailleurs, une conduite de dérivation 22 relie le collecteur d'échappement basse pression 10 à la ligne d'échappement 11 en contournant la turbine 12. Cette conduite de dérivation 22 comprend une vanne de dérivation 23 qui permet de contrôler le débit de gaz contournant la turbine 12. Ici, la conduite de dérivation 22 débouche dans la ligne d'échappement 11 en amont du système de traitement 13.

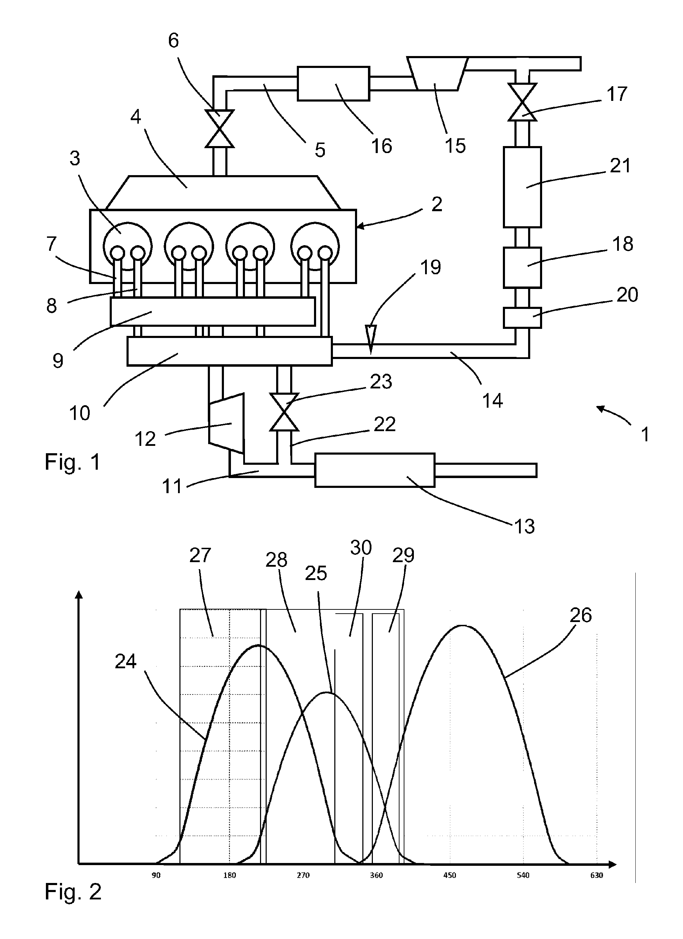

Les trois courbes 24, 25, 26 de la figure 2 représentent, respectivement, le mouvement des soupapes d'échappement haute pression, des soupapes d'échappement basse pression et des soupapes d'admission en fonction de la position angulaire du vilebrequin par rapport à la position de point mort haut de combustion (correspondant à 0°).

Dans le présent mode de réalisation, les cames haute et basse pression sont angulairement décalées de sorte que l'ouverture des soupapes haute pression est commandée en avance d'un angle d'environ 100° avant la commande de l'ouverture des soupapes basse pression (en l'occurrence, à environ 90° pour les soupapes d'échappement haute pression, et environ 190° pour les soupapes d'échappement basse pression), et que la fermeture des soupapes haute pression est commandée en avance d'un angle d'environ 65° avant la commande de la fermeture des soupapes basse pression (en l'occurrence, à environ 340° pour les soupapes d'échappement haute pression, et environ 405 pour les soupapes d'échappement basse pression).

Ainsi, après la combustion du carburant dans la chambre de combustion 3 (angle à 0°) :
- Dans un premier temps, la soupape d'échappement haute pression est la seule soupape ouverte (de l'angle 90° à l'angle 190°), ce premier temps correspond à la partie initiale (et à la partie la plus importante) d'une phase 27 où la turbine 12 est activée par les gaz d'échappement haute pression. Durant ce premier temps, la totalité des gaz d'échappement est utilisée pour entraîner la turbine 12.
- Dans un second temps, les deux soupapes d'échappement haute et basse pression sont ouvertes (de l'angle 190° à l'angle 340°) et donc les deux collecteurs d'échappement 9, 10 sont alimentés. Il est ainsi possible, selon les angles d'ouverture et de fermeture des soupapes d'échappement haute et basse pression, d'envoyer à la turbine 12 la quantité de gaz d'échappement haute pression nécessaire pour obtenir la puissance demandée, puis de diminuer le débit des gaz d'échappement haute pression du fait de l'ouverture des soupapes d'échappement basse pression. Ce second temps correspond à la fin de la phase 27 où la turbine est entraînée et au début (et à la partie la plus importante) d'une phase 28 où la ligne de recirculation 14, avec possibilité d'enrichissement en dihydrogène, peut être empruntée.
- Dans un troisième temps, les soupapes d'échappement basse pression et les soupapes d'admission sont ouvertes (de l'angle 340° à l'angle 405°). Ce troisième temps correspond à la phase 28 de possibilité d'enrichissement en dihydrogène.
- Dans un quatrième temps, seules les soupapes d'admission sont ouvertes (de l'angle 405°à l'angle 595 °).

Quand les gaz d'échappement sont envoyés vers le collecteur basse pression, il est possible d'envoyer ces gaz soit vers la ligne de recirculation 14 uniquement (vanne de recirculation 17 ouverte, vanne de dérivation 23 fermée), soit vers la ligne d'échappement 11 uniquement (vanne de recirculation 17 ouverte, vanne de dérivation 23 fermée), soit vers la ligne de recirculation et la ligne d'échappement 11 (vanne de recirculation 17 ouverte, vanne de dérivation 23 ouverte). Il est ainsi possible, selon le choix de l'envoi des gaz d'échappement basse pression, soit de n'utiliser que la ligne de recirculation 14 (avec la possibilité d'enrichissement des gaz en dihydrogène), soit de n'utiliser que la ligne d'échappement en empruntant la ligne de dérivation 22 (utilisée comme une soupape de décharge de la turbine).

Dans la phase 28 de possibilité d'enrichissement en dihydrogène, il se trouve deux zones d'injection de carburant 29, 30, l'une étant utilisée dans le cas où l'injection se fait dans la conduite d'admission 5, l'autre dans le cas où l'injection se fait dans la chambre de combustion 3 ou par l'injecteur 19 qui se trouve dans la ligne de recirculation 14.

Le groupe moteur 2 de la présente invention permet d'optimiser le rendement énergétique global du moteur 2 sur toute la plage de régime et de charge pour atteindre des niveaux de consommation spécifique très faibles, voire similaires à un moteur diesel.

La ligne de recirculation 14 est particulièrement performante et permet de fournir un débit de gaz en recirculation variable, sans avoir les inconvénients liés aux usuelles pertes de charge de la soupape de décharge de la turbine. La production de dihydrogène permet d'améliorer la combustion en permettant d'atteindre un phasage idéal de la combustion sous forte charge moteur en repoussant la limite d'avance à l'allumage à partir de laquelle des cliquetis peuvent avoir lieu.

Le gain en consommation spécifique du moteur lié à la présente invention peut être supérieur à 10%.

L'invention s'applique donc à des groupes moteurs comprenant plusieurs cylindres définissant chacun des chambres de combustion, où chaque cylindre peut être piloté différemment des autres, et ceci de préférence en continu. (On comprend par « piloté », la façon de commander l'alimentation en carburant et comburant du cylindre, et de commander l'évacuation des gaz d'échappement, notamment.)

A noter également que, selon l'invention, tous les cylindres peuvent participer à la recirculation des gaz, ou au moins plusieurs d'entre eux (sans exclure cependant l'autre possibilité consistant à dédier un seul cylindre à la recirculation des gaz). On comprend par « participer » le fait que les gaz d'échappement émis par le cylindre sont recirculés au moins en partie.

## Revendications

1. Groupe moteur (1) comprenant un moteur à combustion interne (2) duquel débouche, d'une part, un collecteur d'échappement haute pression (9) alimentant une ligne d'échappement (11) qui comprend une turbine (12) d'un turbocompresseur, et, d'autre part, un collecteur d'échappement basse pression (10) alimentant une ligne de recirculation des gaz d'échappement (14), **caractérisé en ce que** la ligne de recirculation (14) comprend un dispositif catalytique de production de dihydrogène (18).

2. Groupe moteur (1) selon la revendication 1, **caractérisé en ce qu'**un réchauffeur (20) des gaz en recirculation est disposé dans la ligne de recirculation (14) en amont du dispositif catalytique de production de dihydrogène (18).

3. Groupe moteur (1) selon l'une des revendications 1 et 2, **caractérisé en ce qu'**un refroidisseur (21) des gaz en recirculation est disposé dans la ligne de recirculation (14) en aval du dispositif catalytique de production de dihydrogène (18).

4. Groupe moteur (1) selon l'une des revendications 1 à 3, **caractérisé en ce que** la ligne de recirculation (14) débouche dans une conduite d'admission d'air (5) en amont d'un compresseur (15) du turbocompresseur.

5. Groupe moteur (1) selon l'une des revendications 1 à 4, **caractérisé en ce qu'**une vanne de recirculation (17) est disposée dans la ligne de recirculation (14) en aval du dispositif catalytique de production d'hydrogène (18).

6. Groupe moteur (1) selon l'une des revendications 1 à 5, **caractérisé en ce qu'**une conduite de dérivation (22) comprenant une vanne de dérivation (23) relie le collecteur d'échappement basse pression (10) à la ligne d'échappement (11) en contournant la turbine (12).

7. Groupe moteur (1) selon l'une des revendications 1 à 6, **caractérisé en ce que** les gaz d'échappement en sortie du collecteur haute pression (9) ne peuvent qu'entraîner la turbine (12) avant d'être envoyés vers la ligne d'échappement (11).

8. Groupe moteur (1) selon l'une des revendications 1 à 7, **caractérisé en ce qu'il** comprend une série de came basse pression permettant le contrôle de l'alimentation du collecteur d'échappement basse pression (10), et une série de cames haute pression permettant le contrôle de l'alimentation du collecteur d'échappement haute pression (9), les cames haute et basse pression étant angulairement décalées de sorte que l'ouverture d'une soupape haute pression est commandée en avance d'un angle d'environ 100°avant la commande de l'ouverture d'une soupape basse pression.

9. Groupe moteur (1) selon la revendication 8, **caractérisé en ce que** les cames haute et basse pression sont angulairement décalées de sorte que la fermeture de la soupape haute pression est commandée en avance d'un angle d'environ 65° avant la commande de la fermeture de la soupape basse pression.

10. Groupe moteur (1) selon l'une des revendications 8 et 9, **caractérisé en ce que** la soupape d'échappement haute pression et la soupape d'échappement basse pression sont dans leur position ouverte respective quand un vilebrequin est dans une position angulaire comprise respectivement entre 90 ° et 240 ° et entre 190 ° et 410 ° par rapport à la position de point mort haut de combustion.

11. Groupe moteur (1) selon l'une des revendications précédentes, comprenant plusieurs cylindres définissant chacun des chambres de combustion, chaque cylindre étant piloté différemment des autres, et ceci de préférence en continu.

12. Groupe moteur (1) selon la revendication précédente, où tous les cylindres participent à la recirculation des gaz.
